# EUROPEAN PATENT SPECIFICATION

(11) **EP 1 783 048 B1**
(45) Date of publication and mention of the grant of the patent: **08.06.2011**
(21) Application number: 06255673.3
(22) Date of filing: 03.11.2006
(51) Int. Cl.: B64D 13/02, B64D 13/06

(54) **Integral add heat and surge control valve for compressor**
Integriertes Regelventil für einen Verdichter zur Steuerung der Wärmezufuhr und des Pumpens
Soupape intégrée d'un compresseur pour la régulation de l'apport de chaleur et du pompage

(30) Priority: 08.11.2005 US 269082
(43) Date of publication of application: 09.05.2007
(73) Proprietor: Hamilton Sundstrand Corporation, Windsor Locks, CT 06096-1010 (US)
(72) Inventor: McAuliffe, Christopher, Windsor, Connecticut 06095 (US); Beers, Craig M., Wehtersfield, Pennsylvania 16109 (US)
(74) Representative: Leckey, David Herbert

(56) References cited:
- EP-A- 0 676 545
- DE-A1- 4 126 907
- GB-A- 867 849
- GB-A- 1 283 256
- US-A- 2 301 063
- US-A- 3 976 390

## Description

### BACKGROUND OF THE INVENTION

This invention relates to a compressor that is used, for example, in an aircraft for supplying compressed air to a cabin air conditioning system.

In some compressor applications in aircraft, air entering a compressor inlet contains water and operates at temperatures below freezing. Ice forming at the inlet reduces the thermodynamic performance of the compressor, can cause damage to the compressor as the ice sheds and can damage the bearing and support structure of the compressor.

Compressors may occasionally operate in an undesirable surge condition in which the ratio between compressor outlet and compressor inlet pressures is undesirable. To avoid surge it is desirable to either lower the compressor outlet pressure or raise the compressor inlet pressure to obtain a pressure ratio within a desired range.

What is needed is a deicing and surge control device that is capable of deicing the compressor inlet and controlling surge in efficient, rapid manner,

A compressor system having the features of the preamble of claim 1 is disclosed in EP-A-0676545. An anti-surge valve is installed in the duct fluidly connecting the outlet and inlet,

### SUMMARY OF THE INVENTION

The invention provides a compressed air system as claimed in claim 1.

The valve opens to provide hot air from the compressor outlet to deice the inlet or to provide the higher pressure compressor outlet air to the lower pressure compressor inlet air to obtain a pressure ratio in a desired range.

The disclosed compressed air unit is designed to provide a compact arrangement so that the valve providing the heated, pressurized air to the inlet is located in close proximity to the inlet for a rapid response time. The duct comprises a relatively short length of tubing interconnecting an add-heat supply outlet and an add-heat plenum inlet, which are provided by a housing of the compressor, The housing also includes an add-heat plenum having an annular wall arranged at the inlet to provide an annular cavity. Hot air from the compressor outlet is provided to the plenum to heat the annular wall quickly at the inlet to prevent deicing.

Accordingly, the present invention provides a deicing and surge control device that deices the compressor and prevents surge.

These and other features of the present invention can be best understood from the following specification and drawings, the following of which is a brief description.

### BRIEF DESCRIPTION OF THE DRAWINGS

Figure 1 is a schematic of the inventive compressed air system.
Figure 2 is a perspective view of an inventive compressed air unit having a combined electric motor and compressor with integrated add heat and surge control features.
Figure 3 is a cross-sectional view of the inventive compressed air unit shown in Figure 2.

### DETAILED DESCRIPTION OF THE PREFERRED EMBODIMENT

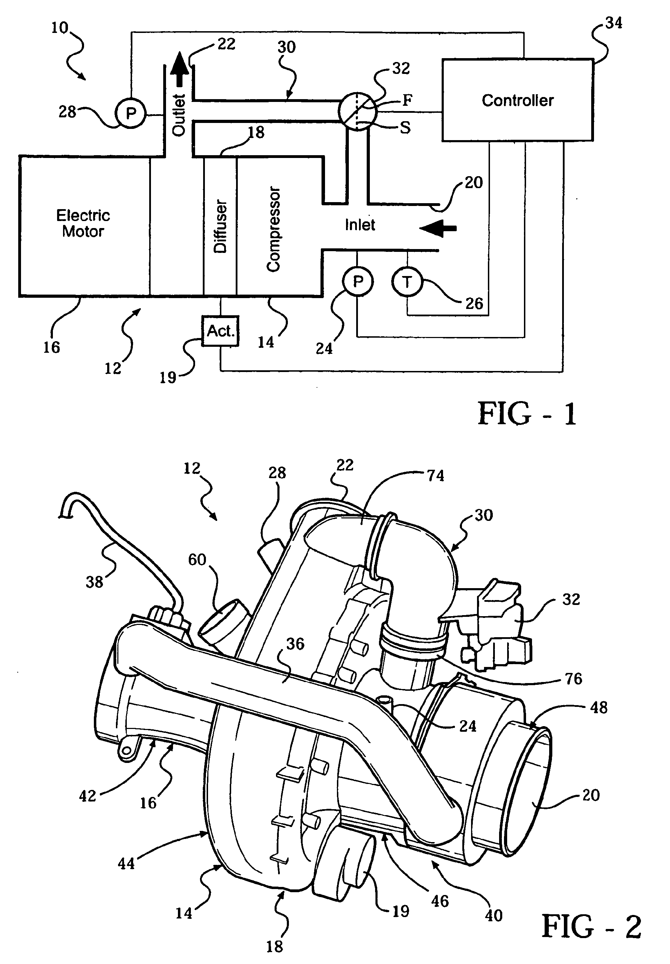

A compressed air system is shown schematically at 10 in Figure 1. The compressed air system 10 includes a compressed air unit 12 comprising a compressor 14 driven by an electric motor 16. A diffuser 18 is arranged before an outlet 22 of the compressor 14, as is known in the art. The diffuser 18 is manipulated by an actuator 19 to vary its area. Air enters the compressor 14 through an inlet 20. Pressure and temperature inlet sensors 24 and 26 are arranged at the inlet 20, and a pressure outlet sensor 28 is arranged at the outlet 22. The actuator 19 and sensors 24, 26 and 28 are schematically shown in communication with a controller 34. The controller 34 uses the sensors 24, 26 and 28 to determine surge and add-heat conditions. The compressed air system 10 described above is suitable for providing, for example, compressed air to an air cycle machine for producing conditioned cabin air.

The present invention utilizes a duct 30 to fluidly connect the inlet 20 and outlet 22. A valve 32 is arranged between the inlet 20 and outlet 22 within the duct 30. The controller 34 is in communication with the valve 32 to move it between first and second positions F and S in response to the surge and add-heat conditions. According to this invention, only one valve is used for these conditions. In one example, the valve 32 is a butterfly valve.

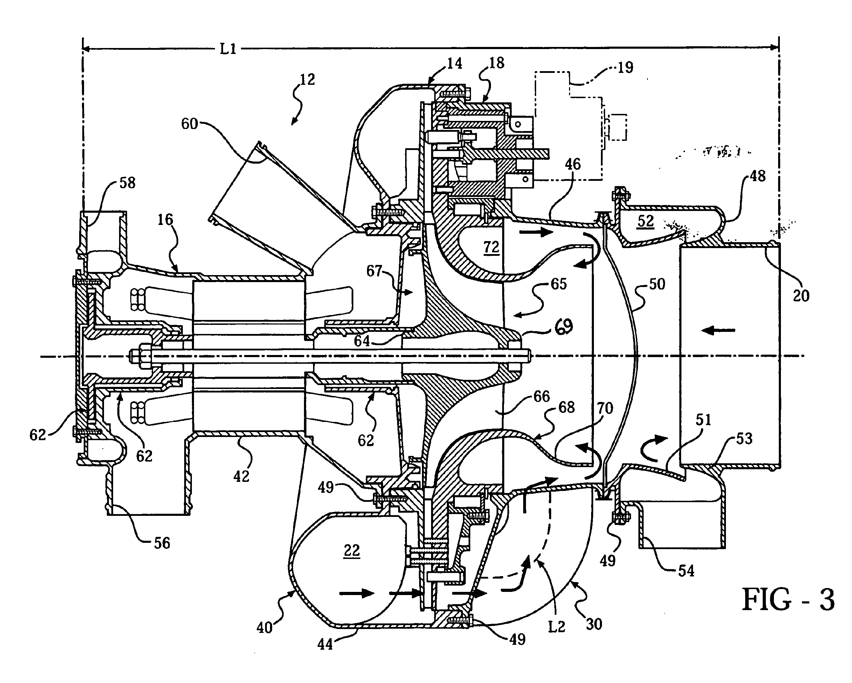

Referring to Figures 2 and 3, wires 38 extend from a housing 40 to provide power to the electric motor 16. The housing 40 includes motor, outlet, add-heat and inlet housing portions 42, 44, 46 and 48 secured to one another by fasteners 49. A screen 50 is arranged between the add-heat housing 46 and the inlet housing 48. A cooling supply plenum 52 is arranged at the inlet 20 to provide cooling air for the electric motor 16. The cooling supply plenum 52 is defined, in part, by first and second flanges 51 and 53. The cooling supply plenum 52 includes an outlet 54 that is connected to a cooling inlet 56 by a bearing cooling duct 36 (shown in Figure 2). Bearings 62 support a rotor 64 of the electric motor 16. A bearing cooling inlet 58 provides cooling air to a bearing cooling outlet 60 via a duct (not shown).

An impeller 66 is secured to the rotor 64. The impeller 66 has an inlet side 65 and outlet side 67. The diffuser 18 is arranged on the outlet side 67 between the impeller 66 and the outlet 22. The housing 40 includes a diffuser shroud 68 in close proximity to the impeller 66. The diffuser shroud 68 extends beyond an end 69 of the impeller 66.

The housing 40 provides an add-heat plenum 72 formed by the diffuser shroud 68 and the add-heat housing 46. The diffuser shroud 68 provides a curved annular wall 70 that tapers radially outwardly as it extends axially away from the end 69 of the impeller 66.

The outlet housing 44 provides an add-heat supply outlet 74 (best shown in Figure 2) that is connected to an add-heat plenum inlet 76 of the add-heat housing 46. In the example shown, the duct 30 is relatively short having a length L2 (represented by the dashed line) that is less than a length L1 of the compressed air unit 12. This relatively short length enables the curved annular wall 70 to be quickly heated in response to sensing an add-heat condition. Similarly, the response time when sensing a surge condition is rapid. A remotely located valve may not provide a desirable response time.

Although a preferred embodiment of this invention has been disclosed, a worker of ordinary skill in this art would recognize that certain modifications would come within the scope of this invention. For that reason, the following claims should be studied to determine the true scope and content of this invention.

## Claims

1. A compressed air system (10) comprising:
a compressor (12) having an inlet (20) and an outlet (22);
a duct (30) fluidly connecting the outlet (22) to the inlet (20) with a valve (32) arranged in the duct (30); and
a controller (34) communicating with the valve (32); **characterised by** said controller (34) being adapted to command the valve (32) to move between first and second positions (F,S) in response to a surge condition and an add-heat condition to regulate an amount of fluid flowing through the duct (30).

2. The system according to claim 1, comprising inlet and outlet pressure sensors (26,28) respectively associated with the inlet (20) and outlet (22), the controller (34) monitoring a ratio of inlet and outlet pressures respectively from the inlet and outlet pressure sensors (26,28) to determine the surge condition.

3. The system according to claim 1 or 2, comprising an inlet temperature sensor (26) associated with the inlet (20), the controller (34) monitoring an inlet temperature from the inlet temperature sensor (26) to determine the add-heat condition.

4. The system according to any preceding claim, wherein the compressor includes a housing (40) providing an add-heat plenum (72) having a generally annular wall (70), the add-heat duct (30) fluidly connecting the add-heat plenum (72) to the outlet (22).

5. The system according to claim 4, wherein the housing (40) includes a shroud (68) at least partially surrounding an impeller (66) of the compressor, the shroud (68) providing the generally annular wall (70).

6. The system according to claim 4 or 5, wherein the valve (32) is moved from the first position (F) to the second position (S) in response to the add-heat condition providing fluid from the outlet (22) to the add-heat plenum (72) to heat the annular wall (70).

## Patentansprüche

1. Druckluftsystem (10) umfassend:
einen Verdichter (12), der einen Einlass (20) und einen Auslass (22) aufweist;
eine Leitung (30), die eine Fluidverbindung zwischen dem Auslass (22) und dem Einlass (20) herstellt, wobei ein Ventil (32) in der Leitung (30) angeordnet ist; und
eine Regel-/Steuereinheit (34), die mit dem Ventil (32) kommuniziert; **dadurch gekennzeichnet, dass** die Regel-/Steuereinheit (34) dazu ausgebildet ist, derart auf das Ventil (32) einzuwirken, dass es in Reaktion auf einen Druckanstiegszustand und einen Wärmezufuhrzustand zwischen einer ersten und einer zweiten Position (F, S) verfährt, um eine Menge von durch die Leitung (30) strömendem Fluid zu regulieren.

2. System nach Anspruch 1, umfassend einen Einlass- und einen Auslassdrucksensor (26, 28), die jeweils dem Einlass (20) und dem Auslass (22) zugehörig sind, wobei die Regel-/Steuereinheit (34) ein Verhältnis von Einlass- und Auslassdruck jeweils von dem Einlass- und dem Auslassdrucksensor (26, 28) überwacht, um den Druckanstiegszustand zu bestimmen.

3. System nach Anspruch 1 oder 2, umfassend einen Einlasstemperatursensor (26), der dem Einlass (20) zugehörig ist, wobei die Regel-/Steuereinheit (34) eine Einlasstemperatur von dem Einlasstemperatursensor (26) überwacht, um den Wärmezufuhrzustand zu bestimmen.

4. System nach einem der vorangehenden Ansprüche, wobei der Verdichter ein Gehäuse (40) beinhaltet, das ein Wärmezufuhrplenum (72) bereitstellt, das eine im Wesentlichen ringförmige Wand (70) aufweist, wobei die Wärmezufuhrleitung (30) das Wärmezufuhrplenum (72) mit dem Auslass (22) fluidmäßig verbindet.

5. System nach Anspruch 4, wobei das Gehäuse (40) eine Verkleidung (68) beinhaltet, die zumindest teilweise einen Impeller (66) des Verdichters umgibt, wobei die Verkleidung (68) die im Wesentlichen ringförmige Wand (70) bereitstellt.

6. System nach Anspruch 4 oder 5, wobei das Ventil (32), in Reaktion auf den Wärmezufuhrzustand, von der ersten Position (F) zu der zweiten Position (S) bewegt wurde, was Fluid von dem Auslass (22) an das Wärmezufuhrplenum (72) liefert, um die ringförmige Wand (70) zu erwärmen.

## Revendications

1. Système d'air comprimé (10) comprenant :
un compresseur (12) comportant une admission (20) et un refoulement (22) ;
un conduit (30) raccordant par fluide le refoulement (22) à l'admission (20) avec une soupape (32) agencée dans le conduit (30) ; et
une unité de commande (34) communiquant avec la soupape (32) ; **caractérisé en ce que** ladite unité de commande (34) est adaptée pour commander la soupape (32) pour qu'elle se déplace entre les première et seconde positions (F, S) en réponse à une condition de pompage et une condition d'ajout de chaleur pour réguler une quantité de fluide circulant dans le conduit (30).

2. Système selon la revendication 1, comprenant des capteurs de pression d'admission et de refoulement (26, 28) respectivement associés à l'admission (20) et au refoulement (22), l'unité de commande (34) surveillant un rapport entre les pressions d'admission et de refoulement respectivement à partir des capteurs de pression d'admission et de refoulement (26, 28) pour déterminer la condition de pompage.

3. Système selon la revendication 1 ou 2, comprenant un capteur de température d'admission (26) associé à l'admission (20), l'unité de commande (34) surveillant une température d'admission à partir du capteur de température d'admission (26) pour déterminer la condition d'ajout de chaleur.

4. Système selon l'une quelconque des revendications précédentes, dans lequel le compresseur inclut un logement (40) formant un plénum d'ajout de chaleur (72) comportant une paroi généralement annulaire (70), le conduit d'ajout de chaleur (30) raccordant par fluide le plénum d'ajout de chaleur (72) au refoulement (22).

5. Système selon la revendication 4, dans lequel le logement (40) inclut un carénage (68) entourant au moins partiellement une hélice (66) du compresseur, le carénage (68) formant la paroi généralement annulaire (70).

6. Système selon la revendication 4 ou 5, dans lequel la soupape (32) est déplacée de la première position (F) à la seconde position (S) en réponse à la fourniture par la condition d'ajout de chaleur d'un fluide du refoulement (22) au plénum d'ajout de chaleur (72) pour chauffer la paroi annulaire (70).
